# FASCICULE DE BREVET EUROPEEN

(11) **EP 1 703 646 B1**
(45) Date de publication et mention de la délivrance du brevet: **02.01.2013**
(21) Numéro de dépôt: 06116590.8
(22) Date de dépôt: 30.03.2000
(51) Int. Cl.: H04B 7/185

(54) **Dispositif pour facturer des services de distraction utilisés par un passager à bord d'un véhicule**
Vorrichtung zur Gebührenberechnung von durch Fahrzeuginsassen gebrauchte Unterhaltungsdienste
Billing apparatus for entertainment services provided to a passenger aboard a vehicle

(30) Priorité: 31.03.1999 FR 9904060
(43) Date de publication de la demande: 20.09.2006
(62) Demande divisionnaire de: 00400873.6
(73) Titulaire: Alcatel Lucent, 75007 Paris (FR)
(72) Inventeur: Roux, Raphaël, 95100 Argenteuil (FR)
(74) Mandataire: Sciaux, Edmond

(56) Documents cités:
- EP-A- 0 491 497
- WO-A-98/21838
- WO-A1-94/28684
- FR-A1- 2 764 154
- US-A- 5 543 779

## Description

L'invention concerne principalement un dispositif pour facturer des services de distraction utilisés par un passager à bord d'un véhicule, un avion par exemple.

Le document WO 94/28684 décrit un système mobile de télécommunication à bord d'un véhicule. Il comprenant un réseau pourvu de moyens servant à raccorder des stations mobiles, ainsi que des moyens de commutation adaptés pour identifier les stations mobiles raccordées au réseau, faire passer des appels provenant des stations mobiles ou leur étant destinées, et enregistrer les services qui sont utilisés par l'intermédiaire des stations mobiles. Le système présenté peut être installé à bord d'un avion ou d'un bateau et comprend un dispositif émetteur-récepteur servant à la transmission, sans fil, d'un signal externe, entre le réseau monté à bord dudit véhicule ou dudit avion et le monde environnant. En outre, le système comprend un câblage ou des moyens d'émission et de réception à infrarouge pour la transmission, par fil ou sans fil, d'un signal interne entre le réseau monté à bord dudit avion ou dudit bateau et les stations mobiles se trouvant également à bord dudit avion ou dudit bateau et raccordées audit réseau. Les données de facturation des services de télécommunication utilisés à bord sont collectées sur une disquette, lorsque le véhicule a terminé son voyage. Cette disquette est lue ensuite sur un ordinateur utilisée habituellement pour facturer les services d'un réseau de télécommunication terrestre. Les données de facturation sont utilisées alors pour facturer les services qui ont été utilisées à bord du véhicule.

L'objet de l'invention est un dispositif pour facturer des services de distraction utilisés par un passager à bord d'un véhicule, comportant :
- des moyens pour mémoriser le numéro d'annuaire d'un passager qui utilise ces services et qui est en outre abonné à un réseau de télécommunication terrestre ; et pour associer à ce numéro d'annuaire un compte des sommes dues pour ces services de distraction ;
- et des moyens de transmission pour communiquer à un point de service gérant la facturation téléphonique de ce réseau de télécommunication terrestre, le numéro d'annuaire et le montant du compte de ce passager, en vue de facturer les services de distraction en même temps que la consommation téléphonique de ce passager dans le réseau où il est abonné ;
caractérisé en ce qu'il comporte en outre des moyens pour associer en outre à ce numéro d'annuaire d'un réseau de télécommunication terrestre un numéro d'abonné fictif d'un réseau satellitaire ;
et en ce que lesdits moyens de transmission comportent des moyens pour communiquer ledit montant du compte, à un point de service gérant la facturation téléphonique de ce réseau de télécommunication terrestre, via des liaisons de signalisation d'un réseau satellitaire.

Le dispositif ainsi caractérisé permet d'automatiser la facturation et surtout de la simplifier pour le transporteur, puisque celui-ci transfère la charge de la facturation à l'opérateur d'un réseau téléphonique qui facture habituellement la consommation téléphonique de ce passager.

Un autre but de l'invention est de permettre l'utilisation des radiotéléphones classiques à bord des avions, tout en évitant qu'un passager négligent ou distrait laisse fonctionner son radiotéléphone pendant les phases de décollage et d'atterrissage.

Un second objet de l'invention est un dispositif pour détecter la présence d'un terminal radiotéléphonique en fonctionnement ; caractérisé en ce qu'il comporte des moyens pour recevoir les signaux émis par un tel terminal, et des moyens pour donner une alarme lorsqu'il détecte ces signaux.

L'invention sera mieux comprise et d'autres caractéristiques apparaîtront à l'aide de la description ci-dessous et des figures l'accompagnant :
- La figure 1 représente un schéma synoptique qui illustre l'utilisation d'un système pour communiquer avec des avions.
- La figure 2 représente le schéma synoptique d'un exemple de réalisation de noeud pour ce système.
- La figure 3 représente le schéma synoptique d'un exemple de réalisation d'une station embarquée comportant un dispositif selon l'invention, cette station étant installée à bord d'un avion.

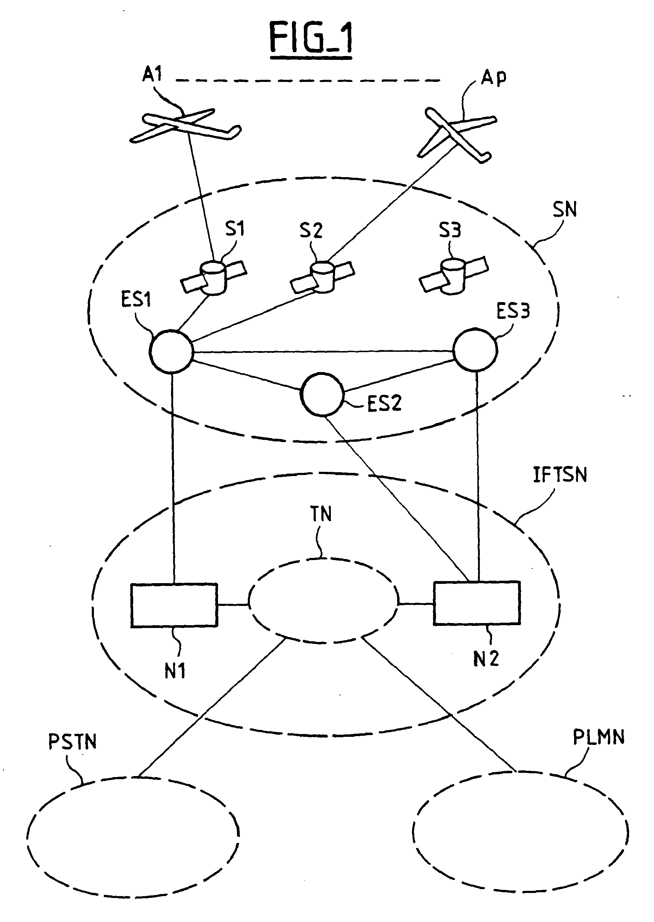

**La** **figure 1** représente un schéma synoptique qui illustre l'utilisation d'un système pour communiquer avec des passagers dans des avions. Pour pouvoir bénéficier du service de télécommunication et des services de distractions à bord, un passager doit être joignable au moyen d'un numéro d'annuaire. Plusieurs procédés pour le rendre joignable seront décrits plus loin. Il n'est pas indispensable que le passager soit déjà abonné à un réseau téléphonique fixe ou à un réseau radiotéléphonique terrestre.

Ce système comprend essentiellement : une station embarquée (non représentée sur la figure 1) dans chaque avion A1, ... , Ap ; un réseau SN de satellites de télécommunication, de type connu, ayant une couverture mondiale, tel que le réseau commercialisé sous le nom d'lrridium ; et un réseau intermédiaire IFTSN, qui est couplé : au réseau de satellites SN, à un réseau de télécommunication fixe PSTN, et à an réseau de radiotéléphonie terrestre PLMN, du type GSM par exemple.

Le réseau de satellites SN comporte une constellation de satellites S1, S2, S3, ..., à moyenne altitude, et des stations terriennes ES1, ES2, ES3, .... Le station embarquée de chaque avion A1, ..., Ap, est à chaque instant en liaison avec un satellite. Les passagers établissent et reçoivent des communications via le réseau de satellites SN. Celui-ci voit chaque passager en cours de communication, comme un abonné fictif et temporaire de ce réseau SN. Le réseau SN est ainsi utilisé pour gérer la mobilité des passagers des avions A1, ..., Ap de la même façon qu'il gère la mobilité de n'importe quel abonné utilisant un terminal portable Irridium en n'importe quel point de la surface de la terre, pour téléphoner via ce réseau de satellites. Le réseau intermédiaire IFTSN, le réseau fixe PSTN, et le réseau de radiotéléphonie terrestre PLMN n'ont donc pas à gérer la mobilité de l'avion.

Le réseau intermédiaire IFTSN comporte une pluralité de noeuds N1, N2,..., et un réseau de transit TN reliant tous ces noeuds: entre eux, au réseau fixe PSTN, et au réseau radiotéléphonique terrestre PLMN. Les stations terriennes ES1, ES2, ES3 sont reliées entre elles, et par ailleurs la station ES1 est reliée au noeud N1 alors que les stations ES2 et ES3 sont reliées au noeud N2. Chaque noeud N1, N2, ... est une passerelle entre le réseau de satellites SN et les réseaux terrestres PSTN et PLMN.

Le réseau PLMN voit chaque noeud N1, N2, ..., comme une station de base fictive, et il voit chaque passager, en cours de communication, comme un abonné mobile fictif, du réseau PLMN, qui serait situé dans la zone desservie par une de ces stations de base fictives. Le réseau PSTN voit chaque passager, en cours de communication, comme un abonné à un autre réseau fixe qui serait géré par un autre opérateur. Le réseau intermédiaire IFTSN voit le réseau SN comme un réseau radiotéléphonique terrestre classique, sachant gérer lui-même la mobilité de ses abonnés.

Chaque avion bénéficie d'un groupe d'abonnements au réseau de satellites SN. Le nombre d'abonnements fixe le nombre des passagers qui pourront établir des communications simultanément. Chaque passager qui est en cours de communication est considéré comme un abonné fictif et temporaire du réseau SN, puisque c'est le transporteur qui est le titulaire réel et permanent de ces abonnements au réseau de satellites SN.

Dans d'autres exemples de réalisation, le réseau intermédiaire IFTSN peut ne comporter qu'un seul noeud.

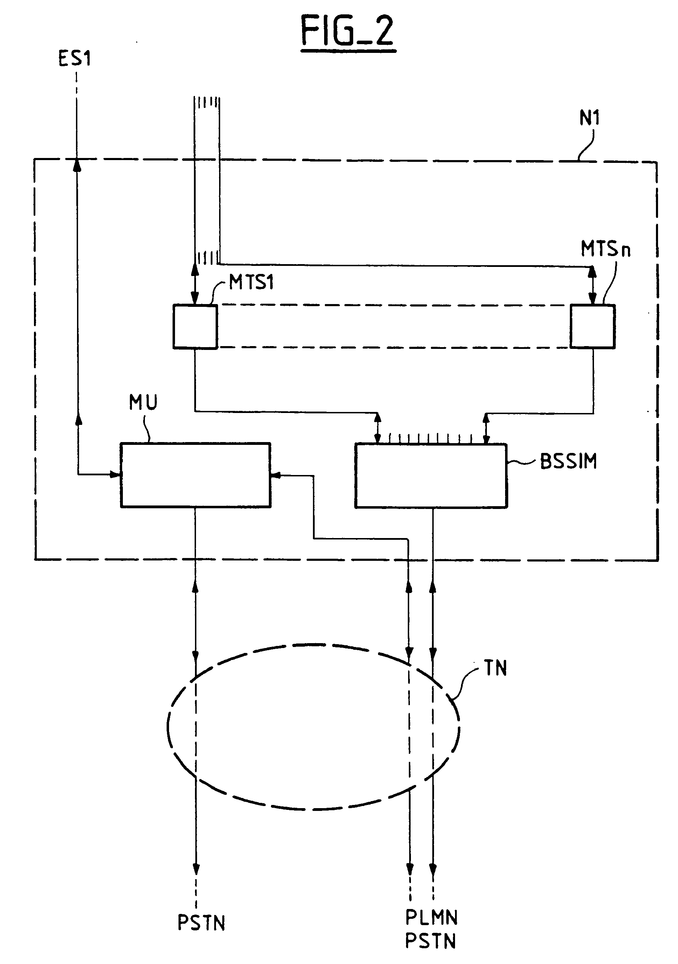

**La** **figure 2** représente le schéma synoptique d'un exemple de réalisation du noeud N1. Il comprend :
- au moins un simulateur de station de base, BSSIM, couplé par le réseau de transit TN au réseau de radiotéléphonie terrestre PLMN, pour simuler le comportement d'une station de base de ce réseau de radiotéléphonie terrestre ;
- n simulateurs de terminal mobile MTS1,..., MTSn, reliés au simulateur de station de base, BSSIM, et reliés à la station terrienne ES1, pour simuler le comportement de n terminaux mobiles fictifs du réseau PLMN, qui resteraient en permanence dans la zone de cette station de base fictive, ces n simulateurs correspondant respectivement à n passagers en cours de communication ;
- et une unité MU de gestion du noeud N1, reliée à la station terrienne ES1 du réseau de satellites SN et couplée aux réseaux PSTN et PLMN par le réseau de transit TN .

Cette unité de gestion MU a pour fonction principale d'associer n numéros d'abonné du réseau de satellites SN à n passagers. Chacun de ces passagers est désigné par son numéro d'annuaire réel, soit d'un réseau radiotéléphonique terrestre, soit d'un réseau téléphonique fixe. Si un passager est un abonné à un réseau radiotéléphonique terrestre, et si son abonnement lui donne droit au service de téléphonie en vol via le réseau radiotéléphonique terrestre PLMN, le numéro d'annuaire de ce passager est associé en outre à l'un des simulateurs de terminaux mobiles MTS1, ..., MTSn.

Chaque simulateur de terminal mobile MTS1,... , MTSn est réalisé avec un processeur et :
- des moyens logiciels pour faire enregistrer dans les bases de données d'abonné du réseau de radiotéléphonie terrestre PLMN, à une adresse correspondant au numéro d'annuaire d'un passager, la présence d'un terminal mobile fictif dans la zone couverte par la station de base fictive correspondant au simulateur de base BSSIM, en vue de faire router vers ce simulateur tous les appels destinés à ce passager ;
- des moyens logiciels pour recevoir une demande d'établissement de communication provenant d'un passager, faire une demande d'établissement de communication dans le réseau de radiotéléphonie terrestre PLMN comme si elle provenait d'un terminal mobile de ce réseau de radiotéléphonie terrestre PLMN, et puis établir une communication avec l'avion transportant ce passager, via le réseau de satellites SN, quand la communication a été établie dans le réseau de radiotéléphonie terrestre PLMN ;
- et des moyens logiciels pour demander au réseau de satellites SN l'établissement d'une communication vers un passager, en le désignant par son numéro d'abonnement dans le réseau SN, lorsque ce simulateur reçoit un appel provenant du réseau PLMN et contenant le numéro d'annuaire de ce passager.

Le simulateur de station de base BSSIM comporte un processeur et :
- des moyens logiciels pour router vers un simulateur de terminal mobile MTSi tous les appels contenant le numéro d'annuaire désignant le passager correspondant à ce simulateur ;
- et des moyens logiciels pour router vers le réseau PLMN, respectivement le réseau PSTN, tous les appels provenant des simulateurs MTS1, ..., MTSn, et à destination de l'un de ces réseaux.

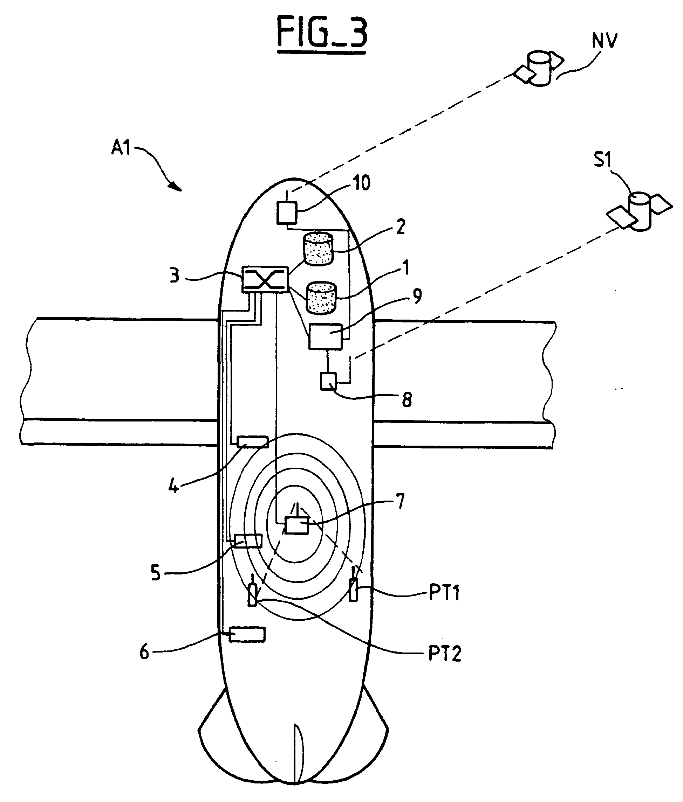

**La** **figure 3** représente le schéma synoptique d'un exemple de réalisation de station embarquée comportant un dispositif selon l'invention, cette station étant installée à bord d'un avion Al par exemple. Cette station embarquée comporte :
- des serveurs 1, 2 de distractions en vol pour fournir notamment de la vidéo à la demande ou en diffusion ;
- un commutateur 3 de trames de données de type Ethernet ;
- des concentrateurs 4, 5, 6,... de trames de données de type Ethernet, qui sont reliés d'une part à ce commutateur 3 et, d'autre part, à des terminaux voix-données intégrés aux sièges des passagers, non représentés ;
- une mini station de base 7, de type GSM, rayonnant uniquement dans la cabine de l'avion, pour permettre aux passagers d'utiliser leurs radiotéléphones GSM habituels, en dehors des phases de vol pendant lesquelles l'utilisation de radiotéléphones est interdite ;
- un émetteur-récepteur radio 8 pour établir une communication radio avec un satellite S1 du réseau de satellites SN ;
- un processeur 9, relié à l'émetteur-récepteur 8, et jouant le rôle de passerelle vis à vis du réseau de satellites SN qui le voit comme un groupe d'abonnés mobiles fictifs de ce réseau SN, chaque passager déclaré, ayant pendant la durée du vol, un numéro d'abonné du réseau SN qui est associé à son numéro d'annuaire habituel.

Ces terminaux voix-données sont de préférence compatibles avec le protocole Internet et comportent : un écran, un clavier alphanumérique, et un combiné téléphonique ou une paire d'écouteurs munie d'un micro. Ils permettent de bénéficier de multiples services : téléphonie, accès à Internet, vidéo à la demande ou en diffusion, audio, service de cabine.

Dans l'hypothèse où il serait autorisé d'utiliser des radiotéléphones à bord des avions, à l'exclusion éventuellement de la phase de décollage et de la phase d'atterrissage, la mini station de base 7 permet d'établir une liaison avec des terminaux portatifs GSM. Ainsi, les passagers qui préfèrent utiliser leur terminal radiotéléphonique GSM personnel, peuvent l'utiliser notamment pour téléphoner. Cette mini station de base 7 a une structure classique, permettant d'utiliser des radiotéléphones GSM classiques dans la cabine de l'avion. Mais elle comporte en plus un dispositif de détection de la présence d'un radiotéléphone GSM, ou d'un autre type, qui est en fonctionnement dans la cabine. Ce dispositif de détection est activable par le personnel de cabine, pendant les périodes de décollage et d'atterrissage, pour signaler cette présence automatiquement (par une alarme sonore par exemple, ou une annonce pré-enregistrée). Ce dispositif permet ainsi de faire respecter efficacement une interdiction d'utiliser des terminaux radiotéléphoniques pendant les phases de décollage et d'atterrissage.

Pour être joignable, un passager doit faire enregistrer sa présence par le processeur 9 à bord de l'avion, et par l'unité de gestion du noeud N1 qui gère les télécommunications avec cet avion. Plusieurs procédés sont utilisables :
- Les passagers qui ont avec eux leur terminal radiotéléphonique GSM personnel peuvent déclencher l'enregistrement de leur présence à bord en allumant ce terminal radiotéléphonique GSM personnel (en dehors de périodes de décollage et d'atterrissage). La mini station de base 7 signale cette présence au processeur 9 qui enregistre alors le numéro d'annuaire du passager dans une liste locale, puis qui le transmet à l'unité de gestion MU d'un noeud du réseau intermédiaire, N1 par exemple, pour qu'il associe un simulateur de terminal mobile à ce numéro d'annuaire.
- Les passagers qui n'ont pas leur radiotéléphone, ou qui ne veulent pas l'utiliser, ou qui ne sont pas autorisés à l'utiliser, peuvent déclencher l'enregistrement de leur présence à bord en allumant le terminal voix-données placé devant eux, et en choisissant une option dans un menu, et en saisissant leur numéro d'annuaire, s'ils sont abonnés à un réseau fixe, ou à un réseau radiotéléphonique terrestre, et si leur abonnement leur donne le droit de bénéficier de ce service de télécommunication à bord des avions. Optionnellement, un lecteur de carte SIM (Carte à puce, personnelle qu'on insère habituellement dans un radiotéléphone) peut être intégré à chaque terminal voix-données pour saisir automatiquement le numéro d'annuaire, et pour permettre l'utilisation de l'annuaire personnel.
- Un passager qui n'aurait aucun abonnement à un réseau terrestre, ou qui ne voudrait pas l'utiliser, pourrait demander un abonnement temporaire pour la durée du vol. Soit le transporteur se charge de gérer de tels abonnements dans un centre de facturation qui lui est propre, soit il propose aux passagers d'acheter des cartes prépayées comme les cartes classiques utilisables dans les cabines téléphoniques publiques. Les terminaux voix-données doivent alors comporter un lecteur de carte adéquat.
- Optionnellement, l'enregistrement du numéro d'annuaire de chaque passager pourrait être fait au moment où les cartes d'embarquement sont contrôlées. Le contrôle est fait par une machine. Il suffirait que cette machine soit munie d'un clavier pour que chaque passager puisse saisir son numéro d'annuaire. La machine lirait simultanément le numéro de siège sur la carte d'embarquement, ce qui permettrait de connaître ainsi quel terminal voix-données sera utilisé par le passager.

Dans tous les cas, le processeur 9 enregistre la présence de ces passagers, dans une liste, en désignant chacun par son numéro d'annuaire de réseau fixe ou de réseau radiotéléphonique terrestre. Il associe ce numéro d'annuaire à :
- un numéro disponible parmi les numéros d'abonné fictif du réseau de satellites SN, qui ont été attribués à cet avion ;
- à un numéro de siège (qui désigne le terminal voix-données utilisable par le passager) ;
- et à un compte des sommes dues pour ces services de distraction.

Il impute le coût de tous les services de distraction et de télécommunication utilisés par ce passager, sur le compte de l'abonnement téléphonique du passager, via des liaisons de signalisation du réseau SN et du réseau intermédiaire IFTSN. Il utilise les moyens de transmission de signalisation du réseau de satellites SN, du réseau intermédiaire IFTSN, et du réseau de radiotéléphonie terrestre PLMN, pour communiquer à un point de service gérant la facturation téléphonique pour ce passager, le numéro d'annuaire et le montant du compte de ce passager, en vue de facturer les services de distraction en même temps que la consommation téléphonique.

Dans l'hypothèse où le transporteur proposerait des abonnements temporaires sans carte prépayée, les données de facturations seraient transmises à un centre de facturation propre à ce transporteur.

L'unité de gestion MU et le processeur 9 communiquent pour enregistrer les mêmes données de gestion des communication. Quand le vol est terminé, le processeur 9 efface automatiquement les enregistrements de présence des passagers, dans ses propres mémoires et dans l'unité de gestion MU du noeud N1. Ces passagers peuvent alors recevoir de nouveau des appels directement sur leurs terminaux personnels à partir des réseaux radiotéléphoniques terrestres classiques.

## Revendications

1. Dispositif pour facturer des services de distraction utilisés par un passager à bord d'un véhicule, comportant :
- des moyens (9) pour mémoriser le numéro d'annuaire d'un passager qui utilise ces services et qui est en outre abonné à un réseau de télécommunication terrestre ; et pour associer à ce numéro d'annuaire un compte des sommes dues pour ces services de distraction ;
- et des moyens de transmission (8, 9) pour communiquer à un point de service gérant la facturation téléphonique d'un réseau de télécommunication terrestre, le numéro d'annuaire et le montant du compte de ce passager, en vue de facturer les services de distraction en même temps que la consommation téléphonique de ce passager dans le réseau où il est abonné ;
**caractérisé en ce qu'**il comporte en outre des moyens (9) pour associer en outre à ce numéro d'annuaire d'un réseau de télécommunication terrestre un numéro d'abonné fictif d'un réseau satellitaire (SN) ;
et **en ce que** lesdits moyens de transmission (8, 9) comportent des moyens pour communiquer ledit montant du compte, à un point de service gérant la facturation téléphonique de ce réseau de télécommunication terrestre, via des liaisons de signalisation dudit réseau satellitaire (SN).

2. Dispositif selon la revendication 1, **caractérisé en ce que**, pour détecter la présence d'un terminal radiotéléphonique en fonctionnement, il comporte des moyens (8, 9) pour recevoir les signaux émis par un tel terminal, et des moyens pour donner une alarme lorsqu'il détecte ces signaux.

## Claims

1. A device for billing entertainment services used by a passenger aboard a vehicle, comprising:
- means (9) for saving the directory number of a passenger who uses those services and who is also a subscriber to a terrestrial telecommunication network; and for associating that directory number with an account of the amounts owed for those entertainment services;
- and transmission means (8, 9) for communicating to a service point that manages the telephone billing of a terrestrial telecommunication network, the directory number and the amount of that passenger's account, in order to bill the entertainment services at the same time as that passenger's telephone consumption within the network that he or she is subscribed to;
**characterized in that** it further comprises means (9) for additionally associating that directory number of a terrestrial telecommunication network with a dummy subscriber number of a satellite network (SN);
and **in that** the transmission means (8, 9) comprise means for communicating said account amount, to a service point that manages the telephone billing of that terrestrial telecommunication network, via signal links of said satellite network (SN).

2. A device according to claim 1, **characterized in that**, in order to detect the presence of a working radio-telephone terminal, it comprises means (8, 9) for receiving the signals emitted by such a terminal, and means for raising an alarm when it detects those signals.

## Patentansprüche

1. Vorrichtung zur Gebührenberechnung für von einem Passagier an Bord eines Fahrzeugs genutzte Unterhaltungsdienste, umfassend:
- Mittel (9) zum Speichern der Anschlussnummer eines Passagiers, der diese Dienste nutzt und zudem Teilnehmer eines terrestrischen Telekommunikationsnetzwerks ist; und zum Zuordnen eines Kontos der für diese Unterhaltungsdienste fälligen Beträge zu dieser Anschlussnummer;
- und Übertragungsmittel (8, 9) zum Übermitteln, an einen Dienstpunkt, welcher die Telefonabrechnung eines terrestrischen Telekommunikationsnetzwerks verwaltet, der Anschlussnummer und des Betrags des Kontos dieses Passagiers zum Zweck der Abrechnung der Unterhaltungsdienste gleichzeitig mit dem Telefonverbrauch dieses Passagiers in dem Netzwerk, an welches er angeschlossen ist;
**dadurch gekennzeichnet, dass** sie weiterhin Mittel (9) umfasst, um dieser Anschlussnummer eines terrestrischen Telekommunikationsnetzwerks zudem eine fiktive Anschlussnummer eines satellitengestützten Netzwerks (SN) zuzuordnen;
und dass die besagten Übertragungsmittel (8, 9) umfassen, um den besagten Betrag des Kontos über Signalisierungsverbindungen des besagten satellitengestützten Netzwerks (SN) an einen Dienstpunkt, welcher die Telefonabrechnung dieses terrestrischen Telekommunikationsnetzwerks verwaltet, zu übermitteln.

2. Vorrichtung nach Anspruch 1, **dadurch gekennzeichnet, dass** sie, um die Präsenz eines in Betrieb stehenden Funkendgeräts zu erkennen, Mittel (8, 9) zum Empfangen der von einem solchen Endgerät emittierten Signale sowie Mittel zum Ausgeben eines Alarms, wenn sie diese Signale erkennt, umfasst.
